# EUROPÄISCHE PATENTSCHRIFT

(11) **EP 2 946 966 B1**
(45) Veröffentlichungstag und Bekanntmachung des Hinweises auf die Patenterteilung: **01.08.2018**
(21) Anmeldenummer: 15166975.1
(22) Anmeldetag: 08.05.2015
(51) Int. Cl.: B60N 2/02, B60N 2/06, B60N 2/24, B62D 33/063, E01C 19/26

(54) **STRASSENWALZE SOWIE VERFAHREN ZUM VERSTELLEN EINES SITZES EINER STRASSENWALZE**
ROAD COMPACTOR AND METHOD FOR ADJUSTING A SEAT OF A ROAD COMPACTOR
ROULEAU COMPRESSEUR ET PROCÉDÉ DE RÉGLAGE D'UN SIÈGE D'UN ROULEAU COMPRESSEUR

(30) Priorität: 19.05.2014 DE 102014209465
(43) Veröffentlichungstag der Anmeldung: 25.11.2015
(73) Patentinhaber: Hamm AG, 95643 Tirschenreuth (DE)
(72) Erfinder: Mahler, Gerhard, 92670 Windischeschenbach (DE); Römer, Axel, 95643 Tirschenreuth (DE)
(74) Vertreter: dompatent von Kreisler Selting Werner - Partnerschaft von Patent- und Rechtsanwälten mbB

(56) Entgegenhaltungen:
- WO-A1-03/013903
- DE-A1- 10 109 185
- GB-A- 1 031 434
- US-A1- 2006 225 935

## Beschreibung

Die Erfindung betrifft einen Sitz für einen Fahrzeugführer einer Baumaschine, insbesondere für eine Straßenwalze nach dem Oberbegriff des Anspruchs 1, sowie ein Verfahren zum Verstellen eines Sitzes nach dem Oberbegriff des Anspruchs 9. Aus der DE 198 13 474 A1 ist eine Baumaschine, nämlich eine Straßenwalze, mit einem Sitz für einen Fahrzeugführer bekannt, der quer zur Fahrtrichtung der Baumaschine verfahrbar ist. Hierzu ist ein Sitzwagen vorgesehen, der auf quer zur Fahrtrichtung der Baumaschine verlaufenden Führungen verfahrbar ist. Derartige verschiebbare Sitze haben in einer Komfortoption einen elektrisch verfahrbaren Sitzwagen, dessen Antriebsmotor mit einer Steuereinrichtung für die Sitzverstellung angesteuert werden kann.

Aus der US 2006/0225935 A1, nach dem Oberbegriff der Ansprüche 1 und 9, ist eine Fräsmaschine mit einem verschiebbaren Fahrstand bekannt. Der Fahrstand weist dabei einen Fahrersitz sowie ein Lenkrad auf und ist über Aktuatoren quer zur Fahrtrichtung von einer linken zur rechten Maschinenseite und umgekehrt verschiebbar gelagert.

Aus der WO 03/013903 A1 ist eine verschiebbare Sitzanordnung für einen Passagiersitz von Fahrzeugen, insbesondere Luftfahrzeugen bekannt. Die Sitzanordnung ist dabei über einen Antriebsmotor verschiebbar, der mittels einer Entkopplungseinrichtung von den Getriebeelementen entkoppelbar ist, so dass die Sitzanordnung manuell verschiebbar ist. Eine verschiebbare Sitzanordnung mit einem motorischen Antrieb der ebenfalls zur manuellen Verstellung entkoppelbar ist, ist für den Bereich von Straßenfahrzeugen insbesondere von Invalidenfahrzeugen aus der GB 1,031,434 bekannt. Die verschiebbare Sitzanordnung bei Invalidenfahrzeugen dient dabei dazu den mobilitätseingeschränkten Personen das Ein- und Aussteigen aus dem Fahrzeug zu ermöglichen.

Aus der DE 101 09 185 A1 ist eine elektrische Antriebseinheit für Sitze bekannt, die über eine kontinuierliche Wegrückmeldungseinrichtung verfügt. Im Falle eines Ausfalls der Spannungsversorgung kann die elektrisch angetriebene Verstelleinrichtung entkoppelt und der Sitz manuell verstellt werden. Dabei bleibt bei der manuellen Verstellung die Funktionalität einer kontinuierlichen Wegrückmeldung erhalten.

Bei der Anschaffung der Maschine muss entschieden werden, ob eine manuelle oder eine elektrische Verstellung des Sitzes implementiert werden soll.

Ist die Baumaschine mit einer elektrischen Sitzverstellung versehen, besteht der Nachteil, dass wenn z.B. der Fahrersitz von der in Fahrtrichtung äußersten linken Position zu der äußersten rechten Position wechseln soll, der elektrische Antrieb viel Zeit benötigt, um den maximalen Verfahrweg auszuführen.

Der Erfindung liegt daher die Aufgabe zugrunde, bei einer Straßenwalze mit einem auf einem Sitzwagen verfahrbaren Sitz für einen Fahrzeugführer bzw. bei einem Verfahren zum Verstellen eines motorisch verfahrbaren Sitzes, eine Schnellverstellung bei großen Verfahrwegen zu ermöglichen.

Zur Lösung dieser Aufgabe dienen die Merkmale der Ansprüche 1 und 9. Die Erfindung sieht in vorteilhafter Weise vor, dass die Sitzverstellung eine manuelle Schnellverstellung des Sitzwagens für einen großen Verfahrweg zwischen einer in Fahrtrichtung äußersten linken und einer äußersten rechten Position des Sitzwagens aufweist, wobei der Antriebsmotor und/oder der Sitzwagen von dem den Sitzwagen antreibenden Getriebeelement entkoppelbar ist. Der elektrische Antrieb und/oder der Sitzwagen wird daher zur manuellen Verstellung des Sitzwagens von dem antreibenden Getriebeelement entkoppelt. Dies hat zur Folge, dass die elektrische Sitzverstellung während der Entkopplung manuell durch den Fahrzeugführer verstellt werden kann, ohne grundsätzlich auf die komfortable elektrische Verstelloption verzichten zu müssen. Der Fahrzeugführer kann zu jeder Zeit zwischen der manuellen Verstellung und der elektrischen Verstellung wählen.

Vorzugsweise ist vorgesehen, dass eine Lageerkennungseinrichtung die aktuelle Position des Sitzwagens erkennt und ein Meßsignal der jeweils aktuellen Position an die Steuereinrichtung überträgt. Diese Lageerkennung des Sitzwagens soll unabhängig von dem elektrischen Antriebsmotor erfolgen.

Das Getriebeelement besteht vorzugsweise aus einer Antriebskette, die mit dem Sitzwagen bewegbar ist. Dabei verläuft die Antriebskette parallel zur Verfahrrichtung des Sitzes.

Bei einer bevorzugten Ausführungsform ist vorgesehen, dass der Antriebsmotor zum Entkoppeln von dem Getriebeelement gegen die Kraft einer Rückholfeder verschiebbar ist.

Vorzugsweise ist vorgesehen, dass der Antriebsmotor zum Entkoppeln von dem Getriebeelement über eine manuelle oder elektrische Entkopplungseinrichtung verschiebbar ist. Beispielsweise kann der Antriebsmotor über einen Hebel gegen die Kraft der Rückholfeder entkoppelt werden oder elektrisch mit Hilfe eines über einen Schalter betätigbaren Elektrohubmagneten.

Die Antriebskette kann über ein erstes Ritzel mit dem Antriebsmotor koppelbar sein, wobei das erste Ritzel mit einer Innenverzahnung, z.B. eine Keilverzahnung, versehen sein kann und der Antriebsmotor mit einer Antriebswelle versehen sein kann, die eine der Innenverzahnung angepasste Außenverzahnung aufweist. Im Falle der Kopplung des Antriebsmotors mit dem Ritzel greift die Antriebswelle mit ihrer Außenverzahnung in die Innenverzahnung des ersten Ritzels ein.

Bei einem bevorzugten Ausführungsbeispiel ist vorgesehen, dass die Lageerkennungseinrichtung die Position des Sitzwagens oder des Getriebeelementes mit einer Sensoreinrichtung erfasst.

Dabei kann die Lageerkennungseinrichtung die Position des Getriebeelementes über einen Drehbewegungssensor erfassen, der mit einem im Eingriff mit der Antriebskette befindlichen zweiten Ritzel gekoppelt ist. Ein derartiger Drehbewegungssensor ist beispielsweise ein koaxial zu dem Ritzel angeordneter Drehpotentiometer.

Der verschiebbare Sitzwagen ist im Resultat von dem motorisch angetriebenen Getriebeelement oder alternativ manuell bewegbar.

Die Erfindung betrifft auch ein Verfahren zum Verstellen des motorisch verfahrbaren Sitzes.

Im Folgenden werden Ausführungsbeispiele der Erfindung näher erläutert.

Es zeigen:
- Fig. 1: eine Draufsicht auf eine Straßenwalze mit einem, insbesondere in Querrichtung verfahrbaren Sitz,
- Fig. 2: eine perspektivische Ansicht des Sitzes,
- Fig. 3: den Antrieb für den Sitzwagen, und
- Fig. 4: eine vergrößerte Darstellung der Antriebseinheit.

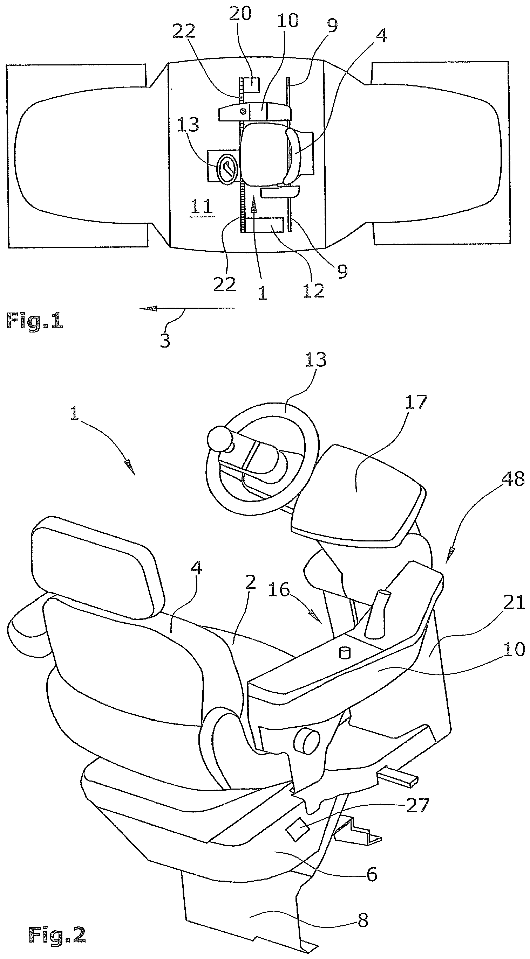

Fig. 1 zeigt eine schematische Draufsicht auf eine Straßenwalze mit einem zumindest quer zur Fahrtrichtung auf einer Plattform 11 eines Fahrstandes verschiebbaren Sitz 1. Der Sitz 1 weist eine in Fahrtrichtung 3 weisende Sitzfläche 2 auf, die nach hinten von einer Sitzlehne 4 begrenzt ist. Die Sitzfläche 2 ist auf einer Sitzkonsole 6 montiert, die auf einem verfahrbaren Sitzwagen 8 befestigt ist, der entlang mindestens einer Führungseinrichtung 9 quer zur Fahrtrichtung 3 mit Hilfe eines elektrischen Antriebs und einer Steuereinrichtung 16 verfahrbar ist.

An dem Sitz 1 ist, wie aus Fig. 2 ersichtlich ist, eine gemeinsam mit dem Sitz 1 verfahrbare Lenksäule 18 mit Lenkeinrichtung 13, sowie ein Armaturenbrett 17 befestigt.

Vorzugsweise auf der rechten Seite des Sitzes 1 ist eine Armlehne 10 vorgesehen, die Bedien- und Anzeigeelemente 48 aufweist und beispielsweise auch eine Steuerungseinrichtung 16 für die Sitzverstellung aufnehmen kann.

Die elektrische Antriebseinheit für die Sitzverstellung ist insgesamt auf der Plattform 11 des Fahrstandes der Straßenwalze an einem Ende des Verfahrweges des Sitzes 1 befestigt.

Die elektrische Antriebseinheit weist einen in beide Drehrichtungen antreibbaren Antriebsmotor 12 auf, der über ein Getriebeelement 14, z.B. in Form einer Antriebskette 22, mit dem Sitzwagen 8 gekoppelt ist.

Die Antriebskette 22 kann als endlos umlaufende Kette vorgesehen werden, die über ein motorseitiges erstes Antriebsritzel 28 und ein zweites am anderen Ende des Verfahrweges angeordnetes Ritzel 40 umgelenkt ist.

Das zweite Ritzel 40 ist vorzugsweise mit einer Lageerkennungseinrichtung 20 gekoppelt.

In Fig. 1 ist die Lageerkennungseinrichtung 20 auf der in Fahrtrichtung 3 rechten Seite der Straßenwalze und der Antriebsmotor 12 auf der linken Seite dargestellt.

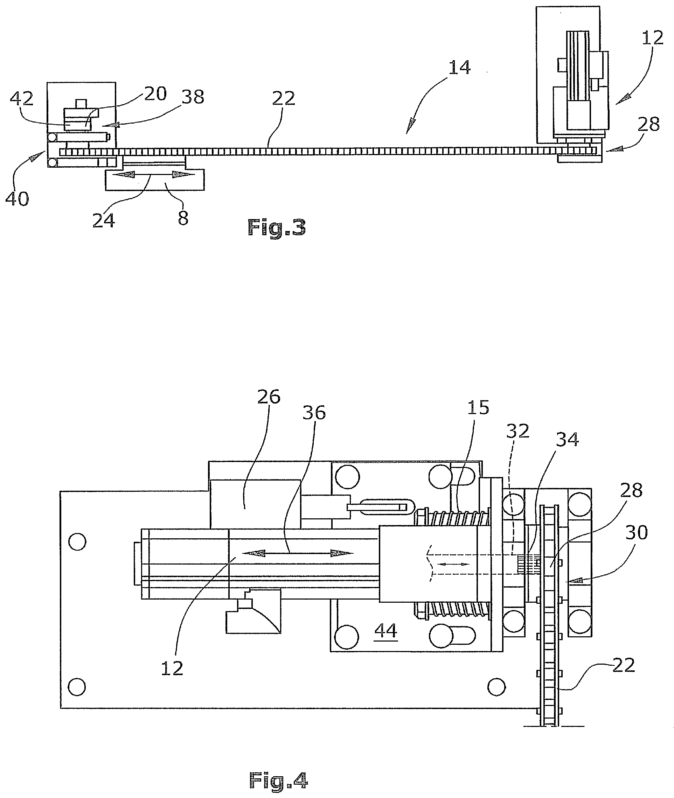

In Fig. 3 ist stellvertretend für den Sitzwagen 8 nur das Ankopplungsglied zu dem Sitzwagen 8 dargestellt. Die Bewegungsrichtung 24 des hin- und her verschiebbaren Sitzwagens 8 quer zur Fahrtrichtung 3 ist auf dem Ankopplungsglied des Sitzwagens 8 angezeigt.

Das mit der Antriebskette 22 gekoppelte Ritzel 40 ist mit einem Drehbewegungssensor 42, z.B. einen Drehpotentiometer gekoppelt, der ein aktuelles Positionssignal für den Sitzwagen 8 an die Steuerungseinrichtung 16 überträgt. Dies ist beispielsweise von Bedeutung, um die Endpunkte des Verfahrweges des Sitzwagens 8 festzulegen, insbesondere wenn zwischenzeitlich der Antriebsmotor 12 oder der Sitzwagen 8 von der Antriebskette 22 entkoppelt gewesen ist.

Fig. 4 ist eine vergrößerte Darstellung der auf der rechten Seite der Fig. 3 gezeigten Antriebseinheit. Der Antriebsmotor 12 ist in Querrichtung zur Antriebskette 22 und zur Bewegungsrichtung 24 des Sitzwagens 8 verschiebbar angeordnet, so dass die Antriebswelle 32 des Antriebsmotors 12 wahlweise bei motorischem Betrieb im Eingriff mit dem ersten Antriebsritzel 28 ist oder bei manuellem Betrieb nicht im Eingriff mit dem Antriebsritzel 28 ist. Das Antriebsritzel 28 weist eine Innenverzahnung 30, z.B. eine Keilverzahnung, auf, die einer dieser Verzahnung angepassten Außenverzahnung 34 am freien Ende der Antriebswelle 32 angepasst ist.

Der Antriebsmotor 12 kann mit der Antriebswelle 32 gegen die Kraft z.B. einer Druckfeder 15 außer Eingriff mit dem ersten Antriebsritzel 28 gebracht werden. Dies kann manuell über einen Hebel erfolgen, oder wie in Fig. 4 dargestellt, mit Hilfe einer aus einem Hubmagneten bestehenden elektrischen Entkopplungseinrichtung 26.

Der Antriebsmotor 12 ist zu diesem Zweck auf einer verschiebbaren Platte 44 montiert.

Die Betätigung der elektrischen Entkopplungseinrichtung 26 kann über einen Schalter 27 erfolgen, der beispielsweise an der Sitzkonsole 6 oder auf der Armlehne 10 angeordnet ist.

Bei Betätigung des beispielsweise als Drucktaste gestalteten Schalters 27 entkoppelt der Elektrohubmagnet der Entkopplungseinrichtung 26 den Antriebsmotor 12 von dem Antriebsritzel 28, so dass der Sitzwagen 8 mit dem Sitz 1 mit der Kraft des Fahrzeugführers freilaufend seitlich verschiebbar ist. Hat der Fahrzeugführer die gewünschte Endposition des Sitzes 1 erreicht, wird mit Hilfe des Schalters 27 die Entkopplung wieder aufgehoben, so dass der Sitz 1 nunmehr wieder in der gewählten Position gehalten wird und elektrisch bedienbar ist.

## Patentansprüche

1. Straßenwalze mit einem auf einem Sitzwagen (8) verfahrbaren Sitz (1) für einen Fahrzeugführer, mit einer elektrischen Sitzverstellung in mindestens eine Verschieberichtung über einen Antriebsmotor (12), der über ein Getriebeelement (14) mit dem Sitzwagen (8) gekoppelt ist, sowie mit einer Steuereinrichtung (16) für die Sitzverstellung, wobei an dem Sitz (1) eine gemeinsam mit dem Sitz (1) verfahrbare Lenksäule (18) mit Lenkeinrichtung (13) befestigt ist,
**dadurch gekennzeichnet, dass**
die Sitzverstellung eine manuelle Schnellverstellung des Sitzwagens (8) für einen großen Verfahrweg zwischen einer in Fahrtrichtung (3) äußersten linken und einer äußersten rechten Position des Sitzwagens aufweist, wobei der Antriebsmotor (12) und/oder der Sitzwagen (8) von dem Getriebeelement (14) entkoppelbar ist.

2. Straßenwalze nach Anspruch 1, **dadurch gekennzeichnet, dass** eine Lageerkennungseinrichtung (20) die aktuelle Position des Sitzwagens (8) erkennt und ein Meßsignal der jeweils aktuellen Position an die Steuereinrichtung (16) überträgt.

3. Straßenwalze nach Anspruch 1 oder 2, **dadurch gekennzeichnet, dass** das Getriebeelement (14) aus einer Antriebskette (22) besteht, die mit dem Sitzwagen (8) bewegbar ist.

4. Straßenwalze nach einem der Ansprüche 1 bis 3, **dadurch gekennzeichnet, dass** der Antriebsmotor (12) zum Entkoppeln von dem Getriebeelement (14) gegen die Kraft einer Rückholfeder (15) verschiebbar ist.

5. Straßenwalze nach einem der Ansprüche 1 bis 4, **dadurch gekennzeichnet, dass** der Antriebsmotor (12) zum Entkoppeln von dem Getriebeelement (14) über eine manuelle oder elektrische Entkopplungseinrichtung (26) verschiebbar ist.

6. Straßenwalze nach einem der Ansprüche 3 bis 5, **dadurch gekennzeichnet, dass** die Antriebskette (22) über ein erstes Ritzel (28) mit den Antriebsmotor (12) koppelbar ist, dass das erste Ritzel (28) mit einer Innenverzahnung (30) versehen ist und dass der Antriebsmotor (12) mit einer Antriebswelle (32) mit einer der Innenverzahnung (30) angepassten Außenverzahnung (34) in das erste Ritzel (28) eingreift.

7. Straßenwalze nach einem der Ansprüche 2 bis 6, **dadurch gekennzeichnet, dass** die Lageerkennungseinrichtung (20) die Position des Sitzwagens (8) oder des Getriebeelementes (14) mit einer Sensoreinrichtung (38) erfasst.

8. Straßenwalze nach einem der Ansprüche 2 bis 7, **dadurch gekennzeichnet, dass** die Lageerkennungseinrichtung (20) die Position des Getriebeelementes (14) über einen mit einem zweiten Ritzel (40) für die Antriebskette (22) gekoppelten Drehbewegungssensor (42) erfasst.

9. Verfahren zum Verstellen eines Sitzes (1) für einen Fahrzeugführer einer Straßenwalze, bei dem die Sitzverstellung des auf einem Sitzwagen (8) verfahrbaren Sitzes (1) über ein mit dem Sitzwagen (8) gekoppeltes Getriebeelement (14) und über eine Steuereinrichtung (16) in mindestens eine Verschieberichtung elektrisch angetrieben wird, wobei an dem Sitz (1) eine gemeinsam mit dem Sitz (1) verfahrbare Lenksäule (18) mit Lenkeinrichtung (13) befestigt ist,
**dadurch gekennzeichnet, dass**
zur manuellen Schnellverstellung des Sitzwagens (8) um einen großen Verfahrweg zwischen einer in Fahrtrichtung (3) äußersten linken und einer äußersten rechten Position der elektrische Antrieb (12) und/oder der Sitzwagen (8) von dem Getriebeelement (14) zeitweise entkoppelt wird.

10. Verfahren nach Anspruch 9, **dadurch gekennzeichnet, dass** die aktuelle Position des Sitzwagens (8) mittels einer Lageerkennungseinrichtung (20) erfasst und an die Steuereinrichtung (16) übermittelt wird.

11. Verfahren nach einem der Ansprüche 9 oder 10, **dadurch gekennzeichnet, dass** zum Entkoppeln des elektrischen Antriebs (12) von dem Getriebeelement (14) eine elektrische Entkopplungseinrichtung (26), insbesondere ein Elektrohubmagnet, über einen Schalter (27) aktiviert wird.

12. Verfahren nach einem der Ansprüche 9 oder 10, **dadurch gekennzeichnet, dass** zum Entkoppeln des elektrischen Antriebs (12) von dem Getriebeelement (14) eine manuelle Entkopplungseinrichtung, insbesondere ein Hebel, gegen eine Rückstellungskraft betätigt wird.

## Claims

1. A road roller comprising a seat (1), movable on a seating carriage (8), for a driver of a construction machine, said seat comprising an electric seat adjustment device for adjustment in at least one shifting direction via a drive motor (12) coupled to the seating carriage (8) via a transmission element (14), and comprising a control device (16) for the seat adjustment device, wherein a steering column (18) movable together with the seat (1) and having a control device (13) is fastened to the seat (1),
**characterized in that**
the seat adjustment device comprises a manual quick adjustment device of the seating carriage (8) for a large moving path between a leftmost and a rightmost position of the seating carriage in driving direction (3), wherein the drive motor (12) and/or the seating carriage (8) are decouplable from the transmission element (14).

2. The road roller in accordance with claim 1, **characterized in that** a position detection device (20) detects the current position of the seating carriage (8) and transmits a measuring signal of the respective current position to the control device (16).

3. The road roller in accordance with claim 1 or 2, **characterized in that** the transmission element (14) is comprised of a drive chain (22) which is movable with the seating carriage (8).

4. The road roller in accordance with any one of the claims 1 to 3, **characterized in that** the drive motor (12), for decoupling from the transmission element (14), is shiftable against the force of a return spring (15).

5. The road roller in accordance with any one of the claims 1 to 4, **characterized in that** the drive motor (12), for decoupling from the transmission element (14), is shiftable via a mechanical or electric decoupling device (26).

6. The road roller in accordance with any one of the claims 3 to 5, **characterized in that** the drive chain (22) is couplable to the drive motor (12) via a first sprocket (28), that the first sprocket (28) is provided with an internal toothing (30) and that the drive motor (12) engages with the first sprocket (28) by means of a drive shaft (32) comprising an external toothing (34) adapted to the internal toothing (30).

7. The road roller in accordance with any one of the claims 2 to 6, **characterized in that** the position detection device (20) detects the position of the seating carriage (8) or of the transmission element (14) by means of a sensor device (38).

8. The road roller in accordance with any one of the claims 2 to 7, **characterized in that** the position detection device (20) detects the position of the transmission element (14) via a rotary sensor (42) coupled to a second sprocket (40) for the drive chain (22).

9. A method for adjusting a seat (1) for a driver of a road roller, in which the seat adjustment device of the seat (1) movable on a seating carriage (8) is driven electrically in at least one shifting direction via a transmission element (14) coupled to the seating carriage (8) and via a control device (16), wherein a steering column (18) movable together with the seat (1) and having a control device (13) is fastened to the seat (1),
**characterized in that**
for manual quick adjustment of the seating carriage (8) by a large moving path between a leftmost and a rightmost position in driving direction (3), the electrical drive (12) and/or the seating carriage (8) is temporarily decoupled from the transmission element (14).

10. The method in accordance with claim 9, **characterized in that** the current position of the seating carriage (8) is detected by means of a position detection device (20) and is transmitted to the control device (16).

11. The method in accordance with one of the claims 9 or 10, **characterized in that**, for decoupling the electrical drive (12) from the transmission element (14), an electrical decoupling device (26), in particular an electrical solenoid, is activated via a switch (27).

12. The method in accordance with one of the claims 9 or 10, **characterized in that**, for decoupling the electrical drive (12) from the transmission element (14), a manual decoupling device, in particular a lever, is operated against a resetting force.

## Revendications

1. Rouleau compresseur avec un siège (1) déplaçable sur un chariot de siège (8)
pour un conducteur de véhicule, avec un réglage de siège électrique dans au moins une direction de coulissement par le biais d'un moteur d'entraînement (12) qui est couplé au chariot de siège (8) par le biais d'un élément de transmission (14), ainsi qu'avec un système de commande (16) pour le réglage du siège, une colonne de direction (18) avec système de braquage (13), déplaçable conjointement avec le siège (1), étant fixée sur le siège (1),
**caractérisé en ce que**
le réglage de siège présente un réglage rapide manuel du chariot de siège (8) pour un grand trajet de déplacement entre une position du chariot de siège la plus à gauche et une position la plus à droite dans le sens de la marche (3), le moteur d'entraînement (12) et/ou le chariot de siège (8) pouvant être découplé de l'élément de transmission (14).

2. Rouleau compresseur selon la revendication 1, **caractérisé en ce qu'**un système de détection de position (20) détecte la position actuelle du chariot de siège (8) et transmet au système de commande (16) la position respectivement actuelle.

3. Rouleau compresseur selon la revendication 1 ou 2, **caractérisé en ce que** l'élément de transmission (14) se compose d'une chaîne d'entraînement (22) qui est mobile avec le chariot de siège (8).

4. Rouleau compresseur selon l'une des revendications 1 à 3, **caractérisé en ce que** le moteur d'entraînement (12) peut coulisser contre la force d'un ressort de rappel (15) pour le découplage par rapport à l'élément de transmission (14).

5. Rouleau compresseur selon l'une des revendications 1 à 4, **caractérisé en ce que** le moteur d'entraînement (12) peut coulisser pour le découplage par rapport à l'élément de transmission (14) par le biais d'un système de découplage (26) manuel ou électrique.

6. Rouleau compresseur selon l'une des revendications 3 à 5, **caractérisé en ce que** la chaîne d'entraînement (22) peut être couplée au moteur d'entraînement (12) par le biais d'un premier pignon (28), **en ce que** le premier pignon (28) est muni d'une denture intérieure (30), et **en ce que** le moteur d'entraînement (12) avec un arbre d'entraînement (32) engrène dans le premier pignon (28) avec une denture extérieure (34) adaptée à la denture intérieure (30).

7. Rouleau compresseur selon l'une des revendications 2 à 6, **caractérisé en ce que** le système de détection de position (20) capte la position du chariot de siège (8) ou de l'élément de transmission (14) avec un système de détecteur (38).

8. Rouleau compresseur selon l'une des revendications 2 à 7, **caractérisé en ce que** le système de détection de position (20) capte la position de l'élément de transmission (14) par le biais d'un capteur de mouvement rotatif (42) couplé à un deuxième pignon (40) pour la chaîne d'entraînement (22).

9. Procédé destiné au réglage d'un siège (1) pour un conducteur de véhicule d'un rouleau compresseur, dans lequel le réglage du siège (1) déplaçable sur un chariot de siège (8) est entraîné électriquement dans au moins une direction de coulissement par le biais d'un élément de transmission (14) couplé au chariot de siège (8) et par le biais d'un système de commande (16), une colonne de direction (18) avec système de braquage (13) déplaçable conjointement sur le siège (1) étant fixée sur le siège (1),
**caractérisé en ce que**,
pour le réglage rapide du chariot de siège (8) sur un grand trajet de déplacement entre une position la plus à gauche et une position la plus à droite dans le sens de la marche (3), l'entraînement électrique (12) et/ou le chariot de siège (8) est découplé temporairement de l'élément de transmission (14).

10. Procédé selon la revendication 9, **caractérisé en ce que** la position actuelle du chariot de siège (8) est captée au moyen d'un système de détection de position (20) et transmise au système de commande (16).

11. Procédé selon l'une des revendications 9 ou 10, **caractérisé en ce que**, pour le découplage de l'entraînement électrique (12) par rapport à l'élément de transmission (14), un système de découplage (26) électrique, en particulier un aimant de levage électrique, est activé par le biais d'un commutateur (27).

12. Procédé selon l'une des revendications 9 ou 10, **caractérisé en ce que**, pour le découplage de l'entraînement électrique (12) par rapport à l'élément de transmission (14), un système de découplage manuel, en particulier un levier, est actionné contre une force de rappel.
